# EUROPÄISCHE PATENTSCHRIFT

(11) **EP 1 593 490 B1**
(45) Veröffentlichungstag und Bekanntmachung des Hinweises auf die Patenterteilung: **18.06.2008**
(21) Anmeldenummer: 05009775.7
(22) Anmeldetag: 04.05.2005
(51) Int. Cl.: B32B 5/26, B32B 5/28, B32B 27/04, B32B 37/04, B29C 70/50, D04H 13/00

(54) **Verfahren zur Herstellung eines flächigen Halbzeugs**
Process of making a plane semi-finished product
Procédé de fabrication d'un produit semi-fini plat

(30) Priorität: 08.05.2004 DE 202004007400 U
(43) Veröffentlichungstag der Anmeldung: 09.11.2005
(73) Patentinhaber: Quadrant Plastic Composites AG, 5600 Lenzburg 1 (CH)
(72) Erfinder: Baser, Burak, 4600 Olten (CH)
(74) Vertreter: Felder, Peter

(56) Entgegenhaltungen:
- WO-A-98/30386
- FR-A- 2 749 535
- US-A1- 2001 032 696

## Beschreibung

Die Erfindung betrifft ein Verfahren zur Herstellung eines flächigen Halbzeugs auf Basis eines glasfaserverstärkten thermoplastischen Kunststoffs.

Bauteile aus faserverstärkten Halbzeugen finden in zunehmendem Maße Anwendung im Automobilbau. Ein gebräuchliches Verfahren zur Herstellung solcher Halbzeuge ist die Schmelzeimprägnierung. Dabei werden mehrere Lagen von Glasfasermatten und Thermoplast- Schmelzebahnen kontinuierlich, vorzugsweise in einer Doppelbandpresse, heiß laminiert und unter Druck abgekühlt. Das entstandene Halbzeug hat die Fachbezeichnung "glasmattenverstärkter Thermoplast" (GMT).
In den Druckschriften WO-A 98/ 30 386 und FR-A 2 749 535 sind flächige Halbzeuge beschrieben, bei denen GMT- Schichten ein- oder beidseitig mit einem GlasfaserGewebe beschichtet sind. Diese Halbzeuge werden dadurch erhalten, dass man bei der GMT- Herstellung ein- oder beidseitig ein Mischfasergewebe zuführt, dessen Faserstränge sowohl in Längs- als auch in Querrichtung aus einer Mischung von Glasfasern und Polypropylenfasern bestehen. Ein solches Mischfasergewebe wird z.B. unter der Bezeichnung "TWINTEX- Gewebe" von der Fa. Vetrotex vertrieben. Derartige mit Mischfasergewebe beschichtete GMT- Halbzeuge zeichnen sich durch eine homogene und gleichmäßige Durchmischung von Thermoplast- Matrix und Verstärkungsfasern aus; darüberhinaus weisen Bauteile aus gewebebeschichteten Halbzeugen eine verbesserte Biegefestigkeit auf. Unbefriedigend ist jedoch, dass die Bauteile eine unebene Oberfläche aufweisen, was von Fasern herrührt, die sich auf der Bauteiloberfläche abzeichnen. Außerdem ist es schwierig, Bauteile mit der Gewebeoberfläche mit anderen Materialien zu verkleben. US 2001/032696 A1 beschreibt ein Verfahren zur Herstellung eines Verbundkörpers, bei dem Mischfasern aus Thermoplastfasern und Glasfasern ("commingled threads") heiss verpresst werden.

Der Erfindung liegt daher die Aufgabe zugrunde, diese Missstände zu beheben. Diese Aufgabe wird dadurch gelöst, dass man bei der Herstellung des Halbzeugs als Außenschicht(en) auf das Mischfasergewebe ein Faservlies zuführt und somit ein verbessertes Halbzeug erhält.

Gegenstand der Erfindung ist demzufolge ein Verfahren zur Herstellung eines flächigen Halbzeugs auf Basis eines glasfaserverstärkten thermoplastischen Kunststoffs, bei dem man mindestens eine Bahn A aus einem Faservlies mit einem Flächengewicht von 20 bis 200 g/m² auf eine Bahn B aus einem Mischfasergewebe mit einem Flächengewicht von 250 bis 4000 g/m², dessen Faserstränge sowohl in Längs- als auch in Querrichtung aus einer Mischung von Thermoplastfasern und Glasfasern bestehen, bei Temperaturen oberhalb des Erweichungbereichs des Thermoplasten aufpresst und dadurch die Schichten miteinander verbindet.

Das Faservlies A ist bevorzugt ein reines Glasfaservlies mit einem Flächengewicht von vorzugsweise 25 bis 100 g/m². Es kann auch ein reines Thermoplastfaservlies sein, z.B. aus Polypropylenfasern, Polyesterfasern oder Polyamidfasern, ferner ein Mischfaservlies, z.B. aus Glasfasern und Thermoplastfasern oder aus zwei verschiedenartigen Thermoplastfasern, z.B. aus Polypropylenfasern und Polyesterfasern oder Polyamidfasern. Dabei sollte vorzugsweise mindestens eine Thermoplastfaserart aus dem gleichen thermoplastischen Kunststoff bestehen wie der Thermoplast des Mischfasergewebes.

Das Mischfasergewebe B weist ein Flächengewicht von 250 bis 2000 g/m² und ein Gewichtsverhältnis Glasfasern zu Thermoplastfasern von 90 : 10 bis 40 : 60 auf. Die Thermoplasfasern können aus Propylenpolymerisaten, Polyestern und Polyamiden bestehen, bevorzugter Thermoplast ist auch hier ein Propylenpolymerisat. Beispiele für geeignete Mischfasergewebe sind TWINTEX- Gewebe der Fa. Vetrotex und COMFIL der Fa. Johns Manville mit Flächengewichten von 500 bis 1900 g/m² und einem Gewichtsverhältnis Glasfasern zu Polypropylenfasern von 60 : 40 oder 75 : 25.

Beim Verpressen bei Temperaturen oberhalb des Erweichungsbereichs des Thermoplasten, bei Propylenpolymerisaten vorzugsweise bei 190 bis 230 °C, schmelzen die Thermoplastfasern, die im Mischfasergewebe und ggf. im Mischfaservlies enthalten sind, auf und bilden eine gleichmäßige Thermoplastmatrix, in der das Glasfasergewebe eingebettet ist (Schicht B'). Die Glasfasern des Faservlieses sind in der Oberfläche der Thermoplastmatrix verankert (Schicht A') und gewährleisten eine glatte Oberflächenstruktur, die auch beim Umformen zu einem Bauteil erhalten bleibt. Außerdem sind Bauteile aus den erfindungsgemäßen Halbzeugen gut mit anderen Materialien, z.B. aus Kunststoff oder Metall, verklebbar. Darüberhinaus wirken Glasfaservliese und Thermoplastfaservliese, die Thermoplasten mit höheren Schmelztemperaturen als Polypropylen enthalten, als Hitzeschild und Wärmeschutz und als flammhemmende Oberflächenschicht. Bei Thermoplastvliesen mit höherem Flächengewicht wird zusätzlich eine bessere Geräuschdämmung erreicht.

Nach dem erfindungsgemäßen Verfahren können Halbzeuge hergestellt werden, die nur aus dem konsolidierten Mischfasergewebe, das ein- oder beidseitig mit dem Faservlies beschichtet ist, bestehen. Beidseitig beschichtete Halbzeuge können beispielsweise als Container- oder Stellwände sowie als Verschleißschutz von LKW-Ladeflächen verwendet werden.

Vorzugsweise werden jedoch einseitig beschichtete Halbzeuge hergestellt, die dann in einem separaten Verfahrensschritt mit anderen Materialien C heiß verpresst werden, wobei die Schicht A' die Außenschicht ist, so dass eine Schichtenfolge A'- B'- C' oder A'- B'- C'- B'- A' erhalten wird.

Das Material C kann ein glasmattenverstärkter Thermoplast, z.B. eine GMT- Platte oder eine GMT- Bahn sein. Man kann den Verbund als Halbzeug herstellen, das dann in einem separaten Arbeitsschritt zum Fertigteil umgeformt wird, oder man kann eine GMT- Platte C zusammen mit dem erfindungsgemäß hergestellten flächigen Halbzeug A'- B' direkt in einer Form zum fertigen Bauteil verpressen.
Das Material C kann auch ein langfaserverstärkter Thermoplast (LFT) sein, bei dem die einzelnen Fasern ohne Verbindung miteinander in der Thermoplastmatrix vorliegen. Derartige LFT- Materialien werden durch Extrusion eines Thermoplasten zusammen mit langen Glasfasern hergestellt, die während der Extrusion verkürzt werden. Auch hier kann man wieder ein flächiges Halbzeug herstellen oder direkt eine LFT- Platte oder einen LFT- Wulst zusammen mit dem flächigen Halbzeug A'- B' in einer Form zum Fertigteil verpressen.
Schließlich kann das Material C auch eine Schaumstoffplatte, z.B. auf Basis eines Polyolefins oder von Polystyrol sein oder eine Honigwaben- Platte, die mit dem flächigen Halbzeug A'- B' verpresst werden.

Bei einer anderen Ausführungsform der Erfindung werden zusätzlich zu den Bahnen A und B direkt die Bahnen C in die Presse eingeführt und miteinander zum Schichtstoff A'- B'- C' oder A'- B'- C'- B'- A' verpresst. Solche Bahnen C können direkt aus der Breitschlitzdüse eines Extruders ausgepresste LFT- Bahnen sein, oder Glasfasermatten, die zusammen mit einer Thermoplastschmelze in eine Doppelbandpresse eingeführt und ein- oder beidseitig mit den Bahnen A und B zusammengeführt und verpresst werden. In beiden Fällen ist als Thermoplast ein Propylenpolymerisat bevorzugt.

Die erfindungsgemäß hergestellten Halbzeuge bzw. Fertigteile zeichnen sich durch eine besonders glatte und gleichmäßige Oberfläche aus, sowie durch gute Verklebbarkeit mit anderen Materialien. Die Fertigteile können als Automobilteile oder Möbelteile dort eingesetzt werden, wo sie nach außen sichtbar sind, beispielsweise als Reserveradmulden, Frontends, Rückwandtüren und Schutzleisten.

## Patentansprüche

1. Verfahren zur Herstellung eines flächigen Halbzeugs auf Basis eines glasfaserverstärkten thermoplastischen Kunststoffs, **dadurch gekennzeichnet, dass** man mindestens eine Bahn A aus einem Faservlies mit einem Flächengewicht von 20 bis 200 g/m² auf eine Bahn B aus einem Mischfasergewebe mit einem Flächengewicht von 250 bis 4000 g/m² , dessen Faserstränge sowohl in Längs- als auch in Querrichtung aus einer Mischung von Thermoplastfasern und Glasfasern bestehen, bei Temperaturen oberhalb des Erweichungsbereichs des Thermoplasten aufpresst.

2. Verfahren nach Anspruch 1, **dadurch gekennzeichnet, dass** das Faservlies aus folgenden Faserarten besteht:
- Glasfasern allein oder
- Thermoplastfasern allein oder
- Glasfasern und Thermoplastfasern oder
- zwei verschiedenartigen Thermoplastfasern,
wobei vorzugsweise mindestens eine Thermoplastfaserart aus dem gleichen thermoplastischen Kunststoff besteht wie der Thermoplast des Mischfasergewebes.

3. Verfahren nach Anspruch 1, **dadurch gekennzeichnet, dass** im Mischfaser-Gewebe der Thermoplast ein Propylenpolymerisat ist.

4. Verfahren nach Anspruch 2, **dadurch gekennzeichnet, dass** der Thermoplast ein Propylenpolymerisat ist.

5. Verfahren nach Anspruch 3, **dadurch gekennzeichnet, dass** in dem Mischfasergewebe B das Gewichtsverhältnis Glasfasern zu Polypropylenfasern zwischen 90 : 10 und 40 : 60 liegt.

6. Verfahren nach Anspruch 1, **dadurch gekennzeichnet, dass** man zusätzlich zu den Bahnen A und B eine Bahn C aus einem langfaserverstärkten Thermoplasten in die Presse einführt und die Bahnen miteinander zu einem Halbzeug mit dem Schichtenaufbau A'-B'-C' oder A'-B'-C'-B'-A' heiss verpresst.

7. Verfahren nach Anspruch 1, **dadurch gekennzeichnet, dass** man zusätzlich zu den Bahnen A und B eine Bahn C aus Glasfasermatten und einer Thermoplastschmelze in die Presse einführt und die Bahnen miteinander zu einem Halbzeug mit dem Schichtenaufbau A'-B'-C' oder A'-B'-C'-B'-A' heiss verpresst.

8. Flächiges Halbzeug der Struktur A'-B' auf Basis eines glasfaserverstärkten thermoplastischen Kunststoffs, hergestellt nach dem Verfahren nach Anspruch 1, umfassend eine erste Schicht A' sowie eine damit verbundene zweite Schicht B', wobei die zweite Schicht B' als gleichmässige Thermoplastmatrix mit darin eingebettetem Glasfasergewebe ausgebildet ist und
wobei die erste Schicht A' Glasfasern umfasst, die in der Oberfläche der Thermoplastmatrix verankert sind und eine glatte Oberflächenstruktur gewährleisten.

9. Verwendung des flächigen Halbzeugs nach Anspruch 8 zur Herstellung von Halbzeugen oder Fertigteilen mit dem Schichtenaufbau A'-B'-C' oder A'-B'-C'-B'-A' durch Heissverpressen mit einer Bahn oder einer Platte C aus einem glasmattenverstärkten Thermoplasten.

10. Verwendung des flächigen Halbzeugs nach Anspruch 8 zur Herstellung von Halbzeugen oder Fertigteilen mit dem Schichtenaufbau A'-B'-C' oder A'-B'-C'-B'-A' durch Heissverpressen mit einer Bahn oder einer Platte C aus einem langfaserverstärkten Thermoplasten.

## Claims

1. A method for producing a flat semifinished product on the basis of a glass fiber reinforced thermoplastic, **characterized in that** at least one sheet A of a nonwoven with an areal weight of 20 to 200 g/m² is pressed, at a temperature above the softening point of the thermoplastic, onto a sheet B of a blended fiber woven fabric having an areal weight of 250 to 4000 g/m², the fiber bundles of which consist of a blend of thermoplastic fibers and glass fibers in the longitudinal as well as in the transversal direction.

2. The method according to claim 1, **characterized in that** the nonwoven consists of the following fiber types:
- glass fibers alone or
- thermoplastic fibers alone or
- glass fibers and thermoplastic fibers or
- two different types of thermoplastic fibers,
wherein preferably at least one thermoplastic fiber type consists of the same thermoplastic as the thermoplastic of the blended fiber woven fabric.

3. The method according to claim 1, **characterized in that** the thermoplastic in the blended fiber woven fabric is a propylene polymerizate.

4. The method according to claim 2, **characterized in that** the thermoplastic is a propylene polymerizate.

5. The method according to claim 3, **characterized in that** the weight ratio of the glass fibers to the propylene fibers in the blended fiber woven fabric B is between 90 : 10 and 40 : 60.

6. The method according to claim 1, **characterized in that** in addition to the sheets A and B, a sheet C of a long-fiber reinforced thermoplastic is inserted into the press and that the sheets are heat pressed together to a semifinished product with the layer configuration A'-B'-C' or A'-B'-C'-B'-A'.

7. The method according to claim 1, **characterized in that** in addition to the sheets A and B, a sheet C of glass fiber mats and a thermoplastic melt is inserted into the press and that the sheets are heat pressed together to a semifinished product with the sheet configuration A'-B'-C' or A'-B'-C'-B'-A'.

8. A flat semifinished product with the structure A'-B' on the basis of a glass fiber reinforced thermoplastic produced according to the method of claim 1, comprising a first layer A' as well as a second layer B' connected thereto,
wherein the second layer B' is configured as a uniform thermoplastic matrix into which a glass fiber woven fabric is embedded and wherein the first layer A' comprises glass fibers that are anchored into the surface of the thermoplastic matrix and thereby ensure a smooth surface structure.

9. Use of the flat semifinished product according to claim 8 for producing semifinished products or finished parts with the layer configuration A'-B'-C' or A'-B'-C'-B'-A' by heat pressing together with a layer or plate C of a glass fiber reinforced thermoplastic.

10. Use of the flat semifinished product according to claim 8 for producing semifinished products or finished parts with the layer configuration A'-B'-C' or A'-B'-C'-B'-A' by heat pressing together with a layer or plate C of a long-fiber reinforced thermoplastic.

## Revendications

1. Procédé de fabrication d'un produit semi-fini plat à base de matières thermoplastiques renforcées par des fibres de verre,
**caractérisé en ce qu'**
on applique avec pression au moins une nappe (A) en un non-tissé de fibres ayant un poids surfacique compris entre 20 et 200 g/m² sur une nappe B d'un tissu de fibres mélangées ayant une densité surfacique de 250-4000 g/m², dont les cordons de fibres, tant dans la direction longitudinale que dans la direction transversale, sont formés d'un mélange de fibres thermoplastiques et de fibres de verre, à une température supérieure à la température de ramollissement de la matière thermoplastique.

2. Procédé selon la revendication 1,
**caractérisé en ce que**
la nappe de fibres se compose des types de fibres suivants :
- fibres de verre seules ou
- fibres thermoplastiques seules ou
- fibres de verre et fibres thermoplastiques ou
- deux fibres thermoplastiques de natures différentes,
et de préférence au moins un type de fibres thermoplastiques et de la même matière thermoplastique que celle du tissu de fibres mélangées.

3. Procédé selon la revendication 1,
**caractérisé en ce que**
dans au moins un tissu de fibres mélangées, la matière thermoplastique est un polymérisat de propylène.

4. Procédé selon la revendication 2,
**caractérisé en ce que**
le thermoplastique est un polymérisât de propylène.

5. Procédé selon la revendication 3,
**caractérisé en ce que**
dans le tissu de fibres mélangées B, le rapport pondéral entre les fibres de verre et les fibres de polypropylène se situe entre 90/10 et 40/60.

6. Procédé selon la revendication 1,
**caractérisé en ce qu'**
en plus des nappes A et B on introduit une nappe C en matière thermoplastique renforcée par des fibres longitudinales, dans la presse, et on comprime à chaud, les bandes entre elles et avec un produit semi-fini de structure de couches A'-B'-C' ou A'-B'-C'-B'-A'.

7. Procédé selon la revendication 1,
**caractérisé en ce qu'**
en plus des nappes A et B on introduit une nappe C en une nappe de fibres de verre et un produit thermoplastique en fusion que l'on introduit dans la pièce et on comprime à chaud les bandes pour former un produit semi-fini ayant la structure de couches A'-B'-C' ou A'-B'-C'-B'-A'.

8. Produit semi-fini plat ayant une structure A'-B' à base d'une matière thermoplastique renforcée par des fibres de verre fabriquées selon le procédé de la revendication 1, comprenant une première couche A' et une seconde couche B' reliée à la précédente, la seconde couche B' étant réalisée sous la forme d'une matrice thermoplastique de même masse et intégrant un tissu de fibres de verre et
la première couche A' comprend des fibres de verre qui s'accrochent à la surface de la matrice thermoplastique et garantissent une structure de surface lisse.

9. Utilisation du produit semi-fini plat de la revendication 8 pour fabriquer des produits semi-finis ou des pièces terminées ayant la structure de couches A'-B'-C' ou A'-B'-C'-B'-A' par compression à chaud avec une bande ou une plaque C en une matière thermoplastique renforcée par des fibres de verre.

10. Utilisation du produit semi-fini plat de la revendication 8 pour fabriquer des produits semi-finis ou des pièces terminées ayant la structure de couches A'-B'-C' ou A'-B'-C'-B'-A' obtenue par compression à chaud avec une bande ou une nappe C en une matière thermoplastique renforcée de fibres longitudinales.
